# EUROPEAN PATENT APPLICATION

(11) **EP 1 464 729 A2**
(43) Date of publication of application: **06.10.2004**
(21) Application number: 04007672.1
(22) Date of filing: 30.03.2004
(51) Int. Cl.: C25B 9/04, C25B 11/03, H01M 4/86

(54) **Method for discharging current from gas diffusion electrodre**

(30) Priority: 31.03.2003 JP 2003096960
(71) Applicant: CHLORINE ENGINEERS CORP., Ltd., Tokyo 135-0033 (JP); Mitsui Chemicals, Inc., Tokyo 105-7117 (JP); TOAGOSEI CO., LTD., Tokyo 105-8419 (JP); KANEKA CORPORATION, Osaka-shi, Osaka 530-8288 (JP); Tosoh Corporation, Syunan-shi, Yamaguchi 746-8501 (JP); ASAHI GLASS COMPANY LTD., Tokyo 100-8405 (JP); Asahi Kasei Chemicals Corporation, Tokyo 100-8440 (JP); DAISO CO., LTD., Osaka-shi, Osaka 550-0002 (JP); Tokuyama Corporation, Yamaguchi 745-8648 (JP)
(72) Inventor: Aikawa, Hiroaki, Kawasaki-shi Kanagawa (JP); Osakabe, Tsugiyoshi, Nogoya-shi Aichi (JP); Hamamori, Mitsuharu, Nogoya-shi Aichi (JP); Katayama, Shinji Chlorine Engineers Corp. Ltd., Tamano-Shi Okayama 706-0134 (JP); Asaumi, Kiyohito Chlorine Engineers Corp. Ltd., Tamano-Shi Okayama 706-0134 (JP)
(74) Representative: Pätzold, Herbert, Dr.-Ing.

(57) **Abstract**

In order to discharge current from a gas diffusion electrode (10) in an electrolytic unit cell including a gas chamber (11), the gas diffusion electrode is electrically connected to the wall surface of the gas chamber having conductivity through an electric connecting element (12) in partial contact with the gas diffusion electrode.

## Description

### BACKGROUND OF THE INVENTION

### (a) Field of the Invention

The present invention relates to a method for discharging current from a gas diffusion electrode having conductivity on its gas chamber surface and used for ion exchange membrane brine electrolysis or salt cake electrolysis.

### (b) Description of the Related Art

Conventional methods of installing a gas diffusion electrode and of discharging current therefrom are roughly divided into (1) a method for discharging the current from the periphery of the gas diffusion electrode and (2) a method using a consolidated current collecting frame-gas diffusion electrode.

In the method (1), the dimensions of the gas diffusion electrode are adjusted such that the outer periphery of the gas diffusion electrode is slightly overlapped with a gasket sealing surface of a cathode element or a cathode current collecting frame for contacting the outer periphery of the gas diffusion electrode with the gasket sealing surface, thereby discharging the current from the outer periphery of the gas diffusion electrode to the cathode current collecting frame.

On the other hand, in the method (2), the catalyst layer of the gas diffusion electrode is placed on a mesh sheet (electric connecting element) for making a gas chamber equipped in a cathode current collecting frame and is sintered under a higher temperature and a higher pressure by using a pressing machine for consolidating the mesh sheet and the catalyst layer, thereby forming the consolidated current collecting frame-gas diffusion electrode. By using this consolidated element, the current can be discharged from the gas diffusion electrode to the cathode current collecting frame or the cathode element.

However, in these conventional methods for discharging the current, the following problems arise in an actual electrolytic unit cell.

In the method (1), while a suitable electric contact area can be secured with respect to a reaction area in a small-sized electrolytic unit cell, a suitable electric contact area cannot be secured with respect to a reaction area in an actual electrolytic unit cell having a reaction area of about 3 m² so that a contact current density of the latter is increased to elevate an electric contact resistance. Also, in this method, with the increase of the dimension of the gas diffusion electrode, a conductor resistance is increased, thereby causing a defect with respect to inferior operational and economical efficiencies.

Further, in the method (2), the reaction area of the actual electrolytic unit cell is about 3 m². When the gas diffusion electrode and the cathode current collecting frame are consolidated, a huge pressing machine and a huge pressing mold are uneconomically required.

In order to solve these problems in the actual electrolytic unit cell, a method for discharging current is proposed (JP-A-2000- 199094) in which a gas diffusion electrode is directly fixed by welding to a cathode current collecting frame. However, the method has the following problem.

In order to weld the gas diffusion electrode, an electric conductive member (metal mesh element) used in the gas diffusion electrode is required to be exposed, and this work takes a lot of labor. Another work of welding the gas diffusion electrode to the cathode current collecting frame also takes a lot of labor with worse workability. With increase of the dimensions of one gas diffusion electrode, the workability is improved. However, the resistance of the electric conductive member (metal mesh element) is increased so that the dimensions of the gas diffusion electrode can be hardly increased over a specified extent.

### SUMMARY OF THE INVENTION

As a result of vigorous investigation, the present inventors have reached to the present invention in which a gas diffusion electrode is electrically connected to a gas chamber wall surface having conductivity in an electrolytic unit cell through an electric connecting element such as a mesh sheet in partial contact with the gas diffusion electrode for discharging current from the gas diffusion electrode.

In view of the foregoing, an object of the present invention is to provide a method for discharging current from a gas diffusion electrode easily operable in an actual electrolytic unit cell.

The present invention provides a method for discharging current from a gas diffusion electrode in an electrolytic unit cell including the steps of electrically connecting the gas diffusion electrode to a gas chamber wall surface having conductivity in the electrolytic unit cell through an electric connecting element in partial contact with the gas diffusion electrode and discharging the current from the gas diffusion electrode.

In accordance with the present invention, the current can be discharged even from the actual-sized larger gas diffusion electrode without substantial increase of the resistance. Further, a conventionally existing electrolytic unit cell can be converted into an electrolytic unit cell mounting a gas diffusion electrode.

An electrolytic unit cell used in the present invention includes a chloro-alkali electrolytic unit cell and a salt cake electrolytic unit cell employing a gas diffusion electrode as a cathode.

Although the present invention will be described taking a reaction of forming caustic alkali (caustic soda) by means of chloro-alkali (brine) electrolysis as an example, the reaction of the present invention is not restricted thereto provided that an oxygen-containing gas acting as a reactant is supplied to a cathode chamber.

Further, the electrolytic unit cell may be a two-chamber electrolytic unit cell having an anode chamber and a cathode chamber separated by using an ion exchange membrane in which the cathode chamber includes one chamber not separated into a cathode liquid chamber and a cathode gas chamber, or a three-chamber electrolytic unit cell having an anode chamber and a cathode chamber separated into a cathode liquid chamber and a cathode gas chamber by a gas diffusion electrode. The electrolytic unit cell of the present invention may be monopolar or bipolar.

In the present invention, an electric connecting element is filled between the gas diffusion electrode and the cathode current collecting frame in the two-chamber or three-chamber electrolytic unit cell such that the gas diffusion electrode is in electric contact with the wall surface of the cathode chamber through the electric connecting element, thereby externally discharging the current in the gas diffusion electrode through the electric connecting element.

The electric connecting element may be formed as a mesh sheet for making a gas chamber. The simple electric contact of the electric connecting element with the gas diffusion electrode and the inner wall surface of the cathode gas chamber during the current discharge may be insufficient, and a suitable surface pressure is desirable for increasing the electric contact.

Since the electric connecting element is not essentially required to have a function of pressing the gas diffusion electrode toward the ion exchange membrane, the electric connecting element itself is not required to be elastic. However, the electric connecting element having the elasticity produces a pressing force toward the gas diffusion electrode and the wall surface of the cathode chamber, thereby increasing a contacting force generated as a repulsive force.

In order to secure the electric contact between the gas diffusion electrode and the electric connecting element in the cathode gas chamber, a force is desirably applied to the gas diffusion electrode from the ion exchange membrane side. Such a force may be generated by using a filling material filled in the cathode liquid chamber (in case of the three-chamber) or in the anode chamber (in case of the two-chamber), and the filling material presses the gas diffusion electrode towards the electric connecting element to secure the electric contact therebetween.

In case of the three-chamber electrolytic unit cell, the electric connection can be secured by applying a force in the order of the ion exchange membrane, the filling material in the cathode liquid chamber, the gas diffusion electrode, the mesh sheet for making the cathode gas chamber and the cathode current collecting frame. In case of the two-chamber electrolytic unit cell, the electric connection can be secured by applying a force in the order of the filling material in the anode chamber, the anode, the ion exchange membrane, the gas diffusion electrode, the mesh sheet for making the gas chamber and the cathode current collecting frame.

The difference of the pressures between the anode chamber and the cathode chamber may be used for securing the contact between the gas diffusion electrode and the electric connecting element. In case of the three-chamber electrolytic unit cell, a pressing force applied in the order of the ion exchange membrane, the filling material in the cathode liquid chamber, the gas diffusion electrode, the mesh sheet for making the cathode gas chamber and the cathode current collecting frame can be obtained by making the pressure of the cathode liquid chamber larger than that of the anode chamber (that of the cathode gas chamber). In case of the two-chamber electrolytic unit cell having a brine in the anode chamber, the liquid pressure of the brine is utilized to obtain a pressing force applied in the order of the ion exchange membrane, the gas diffusion electrode, the mesh sheet for making the cathode gas chamber and the cathode current collecting frame.

Either of the filling material and the pressure difference may be used singly or both of them may be used at the same time.

The material of the electric connecting element is not especially restricted when the material has conductivity and alkali-proof, and carbon or a metal such as nickel and silver is preferable.

The gas diffusion electrode usable in the present invention is not restricted and a conventional gas diffusion electrode can be employed without limitation. Examples of the gas diffusion electrode include a layered gas diffusion electrode formed by affixing a gas diffusion layer prepared by mixing and calcining carbon particles and fluorocarbon resin particles to a reaction layer prepared by mixing and calcining carbon particles supported with catalyst particles and fluorocarbon resin particles, and a gas diffusion electrode prepared by impregnating a substrate made of metal foam electrically plated with silver with a mixture including silver fine particles and fluorocarbon resin fine particles followed by hot-pressing.

Since the current is discharged from a conductive member (or substrate) of the gas diffusion electrode exposed to the gas chamber side to the electric connecting element in the present invention, the conductive member is not required to be welded to the cathode current collecting frame for the current discharge. The mounting may be conducted by only partially sticking the gas diffusion electrode to either of the mesh sheet for making the gas chamber or the cathode current collecting frame for fixation by using an alkali-proof glue. Thereby, the conventional procedure of exposing the outer periphery of the conductive member of the gas diffusion electrode can be omitted. The suitable electric contact area can be secured with respect to the reaction area by discharging the current from the conductive member of the gas diffusion electrode exposed to the gas chamber side, to the mesh sheet even when the dimensions of the gas diffusion electrode become larger.

A mesh sheet made of alkali-proof resin or a porous element can be used as the filling material used in the cathode liquid chamber for pressing the gas diffusion electrode. Examples of the material for the filling material include carbon, a plastic material such as polypropylene and fluorocarbon resin, a rubber-based material such as ethylene-propylene rubber and a metal material such stainless steel and nickel. The filling material used in the cathode liquid chamber may be an elastic structure which is upward permeable and has a lower fluid resistance, and examples of the shape include a mesh, a woven fabric and a foam. If, however, a coverage rate of the cathode liquid chamber by the filling material becomes larger, the electrolysis voltage is increased by the shielding the ion exchange membrane or the gas diffusion electrode surface so that the volume shielding rate in the cathode liquid chamber by the filling material is preferably 50 % or less. In order not to damage the ion exchange membrane and the gas diffusion electrode by the contact with the filling material in the cathode liquid chamber, the filling material preferably has no acute protrusion.

When the current is provided between the both electrodes in the ion exchange membrane electrolytic unit cell having the above-described configuration while an electrolyte such as a brine is supplied to the anode chamber, a caustic soda aqueous solution is supplied to the cathode liquid chamber and an oxygen-containing gas is supplied to the cathode gas chamber, the electric connecting element transmits the current in the gas diffusion electrode in a direction toward the cathode chamber wall surface to discharge the current out of the system.

Even when a pressure in the gas chamber becomes larger than that in the cathode liquid chamber in the method of discharging the current in which the gas diffusion electrode is pressed on the mesh sheet, the effect of preventing the damage caused by the movement of the gas diffusion electrode toward the cathode liquid chamber is also expected.

The above and other objects, features and advantages of the present invention will be more apparent from the following description.

### BRIEF DESCRIPTION OF DRAWINGS

Fig.1 is a vertical sectional view showing a brine electrolytic unit cell mounting a gas diffusion electrode in accordance with an embodiment of the present invention.
Fig.2 is a graph showing a relation between a surface pressure per unit area of a gas diffusion electrode toward a mesh sheet and a voltage drop due to an electric contact resistance between the gas diffusion electrode and the mesh sheet at a contact current density of 3kA/m².
Fig.3 is a schematic view showing a filling material in a cathode liquid chamber used in Example 1.
Fig.4 is a side elevation view showing the filler material of Fig.3.

### PREFERRED EMBODIMENTS OF THE INVENTION

Now, an embodiment of the present invention is more specifically described referring to the annexed drawings. However, the present invention is not restricted thereto.

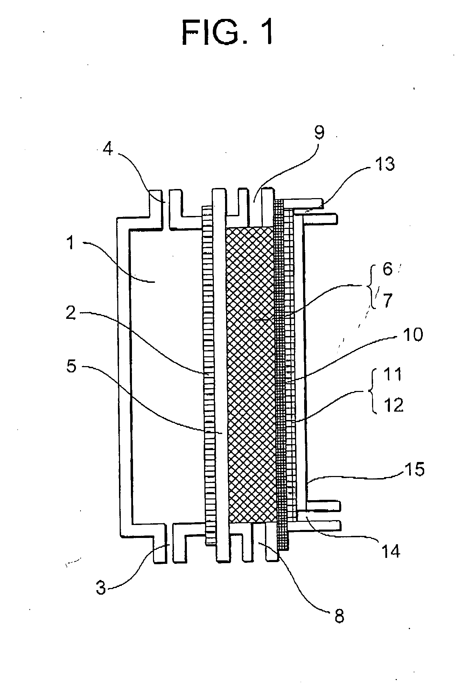

As shown in Fig. 1, an embodiment of the present invention is a unit electrolytic unit cell 20 for brine electrolysis mounting a gas diffusion electrode 10 in which electric connection is achieved by partially contacting the gas diffusion electrode 10 with a mesh sheet (electric connecting element) 12 for making a gas chamber 11.

The electrolytic unit cell 20 includes an anode chamber 1 having an anolyte supplying port 3 on its bottom and an anolyte discharging port 4 on its top and a cathode chamber which is divided into a cathode liquid chamber 6 and a cathode gas chamber 11 by the gas diffusion electrode 10. The anode chamber 1 and the cathode liquid chamber 6 is separated by an ion exchange membrane 5 to which an anode 2 in the anode chamber 1 is tightly contacted. The cathode liquid chamber 6 includes a catholyte supplying port 8 on its bottom and a catholyte discharging port 9 on its top, and the cathode gas chamber includes a gas supplying port 13 on its top side surface and a gas discharging port 14 on its bottom side surface. The side wall surface of the cathode gas chamber 11 constitutes a cathode current collecting frame.

The gas diffusion electrode 10 is prepared by forming a catalyst layer on a conductive member made of a metal mesh material or a sponge-like material with excellent conductivity such as silver and nickel, and the conductive member is exposed to the gas chamber side of the gas diffusion electrode. The mesh sheet 12 for making the gas chamber 11 is also made of the metal mesh material or the sponge-like material with excellent conductivity such as silver and nickel, and is mounted to the cathode current collecting frame 15 by means of welding.

The gas diffusion electrode 10 is fixed to the mesh sheet 12 by partially sticking the conductive member of the gas diffusion electrode exposed to the gas chamber to the mesh sheet 12 by using an alkali-proof glue. In Fig.1, the gas diffusion electrode 10 is pressed toward the mesh sheet 12 by means of both of the filling material 7 filled in the cathode liquid chamber 6 and the liquid pressure of the cathode liquid chamber 6 or of either of them. Thereby, the conductive member and the mesh sheet 12 are in contact with each other so that the current is discharged from the gas diffusion electrode 10 to the cathode current collecting frame 15 through the mesh sheet 12. Although the gas diffusion electrode may be pressed toward the mesh sheet only by the liquid pressure of the cathode liquid chamber 6, the electric resistance between the conductive member and the mesh sheet 12 is reduced and more stabilized when the gas diffusion electrode 10 is pressed by the filling material 7 filled in the cathode liquid chamber 6 in addition to the liquid pressure of the cathode liquid chamber 6.

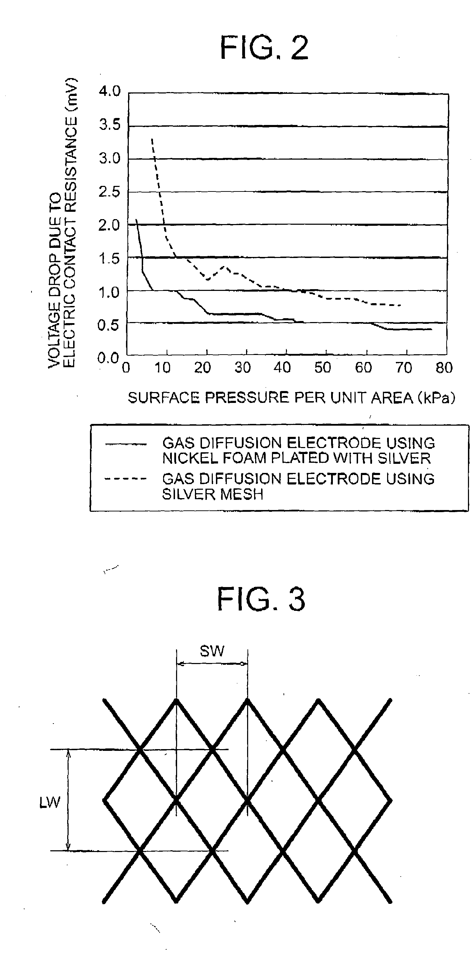

The contact surface pressure between the gas diffusion electrode 10 and the mesh sheet 12 is preferably between 5 kPa and 20 kPa both inclusive per unit area. An example of a relation is shown in Fig.2 between the surface pressure per unit area of the gas diffusion electrode 10 with respect to the mesh sheet 12 and a voltage drop due to the electric contact resistance between the gas diffusion electrode 10 and the mesh sheet 12 at a contact current density of 3kA/m². When the conductive member is made of nickel foam plated with silver, the electric contact resistance between the gas diffusion electrode 10 and the mesh sheet 12 suddenly drops when the surface pressure per unit area of the gas diffusion electrode 10 with respect to the mesh sheet 12 is slightly over 5 kPa, and the electric contact resistance is nearly stable when the surface pressure per unit area is over 20 kPa.

Although the increase of the above surface pressure per unit area stabilizes the electric contact area between the gas diffusion electrode 10 and the mesh sheet 12, the excessive increase is uneconomical because the strengths of the anode, the cathode current collecting frame and the electrolytic unit cell must be increased. Accordingly, the above surface pressure is suitably from 5 kPa at which the electric contact resistance drops to 20 kPa at which the electric contact resistance is stabilized.

The relation between the surface pressure and the voltage drop when the conductive member is made of silver mesh is also shown in the graph of Fig. 2.

The contact surface pressure of the electric contact surface is larger than an average surface pressure per unit area because the gas diffusion electrode 10 and the mesh sheet 12 are in electric contact at thickest intersecting points of the mesh sheet 12. Even if the surface pressure per unit area of the gas diffusion electrode 10 toward the mesh sheet 12 is smaller, the contact surface pressure of the electric contact surface therebetween becomes larger to reduce the electric contact resistance. This means that the electric contact resistance between the gas diffusion electrode 10 and the mesh sheet 12 can be reduced without increasing the strengths of the anode, the cathode current collecting frame and the electrolytic unit cell.

Although Examples of the method of discharging the current from the gas diffusion electrode in accordance with the present invention will be described, the present invention shall not be deemed to be restricted thereto.

### [Example 1]

An ion exchange membrane electrolytic unit cell shown in Fig.1 was assembled.

A dimensionally stable electrode available from Permelec Electrode, Ltd. was used as an anode and a liquid impermeable gas diffusion electrode was used as a cathode. The gas diffusion electrode was prepared by impregnating a substrate made of nickel foam electrically plated with silver, with carbon black, silver fine particles and PTFE fine particles followed by sintering by means of hot-pressing. The respective dimensions of the reaction surfaces of the anode and the gas diffusion cathode were adjusted to be 2480 mm in width and 1220 mm in height.

Aciplex F-4203 available from Asahi Kasei Corporation was used as an ion exchange membrane.

Corrugated mesh made of nickel and having electrically plated silver with thickness of 10 microns available from Katurada Grating Kabushiki Kaisha was used as the mesh sheet (electric connecting element) for forming the gas chamber.

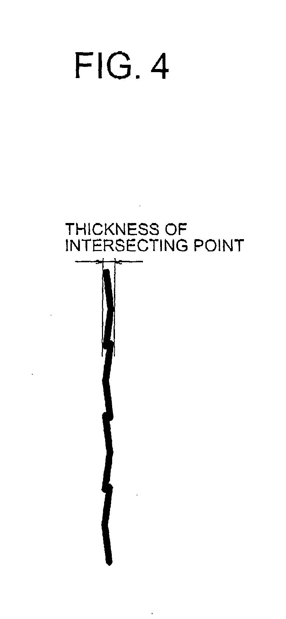

A mesh-like sheet made of polypropylene was used as a filling material. As shown in Fig.3, the shape of the mesh-like sheet was such that a plurality of fibers arranged in parallel at the same distances were superposed on another plurality of fibers arranged in parallel to form a number of rhombic openings. As shown in Fig.4, the thickness of the intersecting point was maximum. A shorter width (SW) of the openings was 25 mm, and a longer width (LW) of the openings was 37 mm. The thickness at the intersecting point was 2.7 mm, a volume shielding rate was about 20 %, an area shielding rate was about 40 %, and an opening rate was about 60 %.

The ion exchange membrane electrolytic unit cell was assembled by stacking the respective members and fastening these elements by using bolts. The electrolytic unit cell was operated under the conditions of a current density of 3 kA/m², an electrolytic temperature of 85°C and caustic soda concentration of 32 % in weight. Corrected electrolysis voltage was 2.20 V. The corrected electrolysis voltage refers to electrolysis voltage converted under conditions of an electrolysis temperature of 90°C and caustic soda concentration of 32 % in weight.

### [Example 2]

Electrolysis was conducted under the same conditions as those of Example 1 except that a gas diffusion electrode had an Ag mesh supporting a catalyst layer, and was fixed to a cathode current collecting frame by welding. The corrected electrolysis voltage was similarly to that of Example 1.

Since the above embodiments are described only for examples, the present invention is not limited to the above embodiments and various modifications or alternations can be easily made therefrom by those skilled in the art without departing from the scope of the present invention.

## Claims

1. A method for discharging current from a gas diffusion electrode in an electrolytic unit cell including a gas chamber comprising the steps of:
electrically connecting the gas diffusion electrode to a wall surface of the gas chamber having conductivity in the electrolytic unit cell through an electric connecting element in partial contact with the gas diffusion electrode; and
discharging the current from the gas diffusion electrode.

2. The method for discharging the current as claimed in claim 1, wherein the gas diffusion electrode is fixed to the electric connecting element by using an alkali-proof glue.

3. The method for discharging the current as claimed in claim 1, wherein the electrolytic unit cell is divided into three chambers including an anode chamber, a cathode liquid chamber and a cathode gas chamber, and a liquid-permeable and alkali-proof filling material is filled in the cathode liquid chamber to press the gas diffusion electrode toward the electric connecting element such that the gas diffusion electrode is in electric contact with the electric connecting element.

4. The method for discharging the current as claimed in claim 1, wherein the electrolytic unit cell is divided into three chambers including an anode chamber, a cathode liquid chamber and a cathode gas chamber, and the gas diffusion electrode is pressed toward the electric connecting element by means of a liquid pressure in the cathode liquid chamber such that the gas diffusion electrode is in electric contact with the electric connecting element.

5. The method for discharging the current as claimed in claim 1, wherein the electrolytic unit cell is divided into two chambers including an anode chamber and a cathode chamber separated by using a diaphragm, and a liquid-permeable filling material is filled in the anode chamber to press the gas diffusion electrode toward the electric connecting element through the diaphragm such that the gas diffusion electrode is in electric contact with the electric connecting element.
